# EUROPEAN PATENT SPECIFICATION

(11) **EP 0 554 594 B1**
(45) Date of publication and mention of the grant of the patent: **06.08.1997**
(21) Application number: 92300988.0
(22) Date of filing: 06.02.1992
(51) Int. Cl.: A23K 3/03

(54) **Composition and method for preserving and waterproofing hay and similar moisture absorbent materials**
Zusammensetzung und Verfahren zum Konservieren und Wasserdichtmachen von Heu und ähnlichen feuchtigkeitsabsorbierenden Materialien
Composition et procédé de conservation et d'imperméabilisation de foin et de matériaux similaires absorbant l'humidité

(43) Date of publication of application: 11.08.1993
(73) Proprietor: TILLIN, Inc., Shawnee Mission, Kansas 66217 (US)
(72) Inventor: Kuhn, Dale F., Shawnee Mission, Kansas 66217 (US)
(74) Representative: Sherrard-Smith, Hugh

(56) References cited:
- EP-A- 0 465 801
- CA-A- 949 257
- CA-A- 1 066 115
- US-A- 4 846 890
- US-A- 4 859 480
- US-A- 5 019 403

## Description

### Background of the Invention

The present invention relates to methods of treating agricultural or related cellulosic materials and in particular to methods of treating cut or harvested hay, milo and similar materials. The method is particularly adapted to the treatment of freshly cut hay and to the preservation of hay bales or haystacks by the application of preferred compositions according to this disclosure.

Freshly cut hay is generally processed into bales or stacks for storage. These have been of a variety of sizes, but in the past most hay bales, such as square bales, were usually 2 to 3 cubic feet in size. However, more recently newer baling techniques have led to production of large circular bales of about 100 cubic feet in size and weighing 1,200 to 1,500 pounds. Also, many hay cutting and storing techniques produce very large stacks that are much larger than even the largest bales.

Hay bales and/or stacks may be transported over considerable distances and stored for considerable lengths of time before use. During any transport or storage both physical and chemical changes can occur in the hay, lessening its value and usability as animal feed.

Physical changes in the hay are more prevalent in large bales and stacks than in smaller bales. The physical changes are often due to the large weight of the bales or stacks. The outer and lower layers of these heavy hay bales and haystacks can become loose, causing large amounts of hay to fall from the bale or stack during transportation. The losses are often greater. This not only causes inconvenience and financial loss, but in some instances it can be hazardous. For example a transported stack of hay, when carried over a highway, may drop as much as 30 percent of its weight onto the road, and the dropped hay may pose a danger to other motorists.

Another way in which portions of hay material may be lost is due to weather, for example, high winds or heavy rains. Also, extensive shock or vibration during transport can cause substantial losses from even tightly stacked piles of material.

In the past these physical changes have been less of a problem, due to the smaller size of the hay bales. Smaller hay bales may be tightly bound with baling wire, and are therefore less likely to undergo the above-described loss. Thus, until relatively recently, there has been less need to control this problem.

Chemical changes in the hay, generally deterioration and rot leading to nutritional losses, occur in part due to moisture in the hay and also microbial action with in the bales or stacks. The moisture may enter the hay as a result of rains and the like. Very large hay bales or stacks may be particularly slow to dry, and be particularly hard to keep dry, especially when frequent exposure to rain occurs.

Microbial action has long been recognized as a source of problem in freshly cut materials, especially hay. Most of the losses due to microbial action occur within the first few days or weeks of the baling or stacking. The microbial action produces high temperatures within the bales, leading to the nutritional loss prior to a complete drying of the hay.

In the past different approaches have been taken in attempts to solve each of the above problems, and no single unified solution has been achieved. With respect to microbial action, generally anti-microbial materials have been added to cut agricultural material. For example, preservatives have been added to fodder being stored.

With respect to the problem of water due to rains or the like, generally the haystacks or bales, when sun is not necessary, have been covered by waterproof or water-resistant coverings, such as plastic tarps or the like, or the material has been stored indoors.

With respect to losses due to loose hay in outer layers of the stacks or bales, past solutions have generally involved the use of baling wire, cord or the like to tie the bale or stack together. Of course with very large stacks or bales this can be difficult to manage.

U.S. patent No. 4846890 discloses a composition and method for preserving agricultural materials such as hay and silage using casein. U.S. patent No. 5019403 discloses a method for coating substrates including high moisture edible substrates utilising water soluble protein material and hydrophobic material.

Thus, no satisfactory, unified approach to the problem has yet been developed. The multiplicity of activity required by the approaches listed above may not only be relatively expensive and inconvenient, but also may require substantial expenditure of time on the part of farmers during a period of the growing season in which time is short and valuable. Further, in some instances the solutions have been less than effective. For example, covering hay with a tarp can prevent the sun and air from getting to the hay, leading to ineffective drying. It has already been mentioned that for large haystacks and large bales binding with baling wire, cord or the like can be ineffective, especially unless large amounts of wire or cord are used.

The invention may also be useful in the treatment of paper stock, such as corrugated boxes, as a water-repelling agent, and may be necessary when the box material is in contact with edible items. Further, the adhesive elements of the claimed preparation may be useful as a binder for pulverulent materials which would otherwise emit dust or airborne particles.

### Objects of the Invention

Therefore, the objects of the present invention are to provide a method of preserving cut agricultural products and silage; to provide such a method especially suited for the preservation of hay; to provide a method of treating a haystack or hay bale to inhibit the retention of moisture therein; to provide a method of treatment of a haystack or hay bale to inhibit microbial action; to provide a method of treatment of a haystack or hay bale by application of a chemical composition, to retard the retention of moisture and also to retard microbial action; to provide such a method which includes treatment of the haystack or hay bale with an adhesive to cause outer layers of the haystack or hay bale to become adhered together, reducing loss due to weather, travel or the like; to provide a chemical composition for binding together cut agricultural materials and treating the harvested material to provide a substantial tendency to repel water and minimize microbial action; to provide such a composition especially suited for treatment of haystacks and hay bales; to provide such a composition which can be safely ingested by livestock feeding on the harvested material; to provide such a method and composition utilizing chemicals that are generally regarded as safe for ingestion by livestock and eventual passage into the human food cycle; to provide such a method which is relatively easy to accomplish; to provide a composition for use in such a method which is relatively easy to manufacture and apply; to provide such a composition which is relatively inexpensive to produce and which can be produced from readily available materials; to provide such a composition which is particularly well adapted for the proposed usages thereof; and, to provide such a method which is particularly well adapted for use in a variety of types of farming.

### Description of the Invention

As required, detailed embodiments of the present invention are disclosed herein; however, it is to be understood that the disclosed embodiments are merely exemplary of the invention which may be embodied in various forms. Therefore, specific details disclosed herein are not to be interpreted as limiting, but rather merely as a basis for the claims and as a representative basis for teaching one skilled in the art to variously employ the present invention in virtually any appropriate manner.

The basic methods proposed in this invention call for application, to the exterior layers of hay bales and stacks, or bales and stacks of other agricultural materials and products such as common silage, or even to cellulosic paper stock and pulverulent materials, of coating materials capable of protecting the physical integrity of the bales and stacks and/or inhibiting adverse moisture and microbial action which may degrade the nutritional content of the materials. The preferred coatings are prepared from agents that are generally considered nutritionally and toxicologically safe for the animals being fed and for eventual contact with the human food chain. Thus, many of the compositions described herein are made with food additives or chemicals generally regarded as safe; that is, GRAS materials.

Generally, the coatings are adhesive mucilages prepared so that they may be applied by spraying or other surface application to the exterior layers of hay bales or stacks in the field, usually shortly after cutting or stacking; or in the case of paper goods, during manufacture. While the treatment may occur at a later time, it is preferable to apply it early, to provide the best protection for the hay or other harvested material. In some instances it may be desirable to install spraying or spreading equipment directly in the cutting and/or baling machinery for application immediately after cutting or bale formation.

The general type of formulation may be generally characterized as an adhesive mucilage. When applied to a haystack or hay bale, the outer layers of the haystack will become bound together, leading to inhibition of breaking apart of the hay bale or cellulose fibers; that is, retention of physical integrity. Further, the adhesive layer will be somewhat water repellent and will include a preservative or antimicrobial compound to inhibit deterioration and rot.

### ADHESIVE COMPOSITIONS

Adhesive materials according to the present invention may be manufactured in two forms. First, they may be made in a somewhat fluid form, for example, as a concentrate to be diluted with water prior to spraying on a hay bale. Alternatively, they may be manufactured in a dry powder form for transport and storage, the powder to be dissolved in or added to water prior to application on cut materials such as a haystack or hay bale.

The preferred adhesive formulations according to the present invention have, as their primary active component for adhesive action, a protein, and more particularly, a soy protein. Soy protein is readily available and well tolerated in animal feed and the human food cycle. It is also very effective in forming a water-resistant adhesive, under certain circumstances.

The preferred protein is a soy isolate, a form of which is available from the Ralston Purina Company and designated as feed grade soy protein HVF-50. A typical analysis for the preferred protein is protein 84.52%, moisture 4.53%, fat 3.35%, fiber .26% and ash 5.58%. The protein contains various amino acids, principally threonine, isoleucine, leucine, lysine, phenylalanine, valine, and arginine. The soy protein adhesive provides a continuous, tough, hard film that does not easily rinse off the protected product.

The soy protein, in a test sample, was applied by mixing 454 g (one pound) of the material with 3786 ml (one gallon) of water. This seemed to provide a satisfactory application.

### ADHESIVE FORMULATION 1

The following is a preferred liquid adhesive formulation according to the present invention. The percent compositions are by weight, the unlisted component being water.
6% - 10% soy isolate protein;
0.5% - 1.2% polyvinylpirrolidone;
0.05% -0.2% polyacrylamide emulsifying agent;
0.2% - 0.4% propionic acid.

The above formulation is a viscous mucilage, and requires substantial pressure for application. For field use hand pumps or mechanical pumps might be used. The coating is to be sprayed or otherwise spread onto the outer surface of the bales or stacks in quantities sufficient to cover the entire outer surface of the hay, or other material being coated. The coating should generally be applied in sufficient amount for penetration of from one to three inches. Preferably from about 1,500 to 3,000 milliliters (ml) of such a coating should be applied for the protection and stabilization of a bale or stack including about 544 kg (1,200 pounds) to 680 kg (1,500 pounds) of material. The amount of coating to be applied varying, proportionately, with concentration and with amount of cut material to be coated.

It has been found that the nature of and order of steps taken in the mixing of the components can make a considerable difference in the ease with which the mucilage or adhesive formulation can be formed. If appropriate care is not taken, separation of the mixtures may occur, or some components may settle or agglomerate.

### ALTERNATIVE ADHESIVE: FORMULATION 2 FOR DRY MIX COMPOSITIONS

Under certain circumstances it may be desirable to have the adhesive formulation available in a dry powder or mix form. This may be more suitable for manufacturing purposes when the product has to be shipped. That is, the above formulation, Formulation 1 is generally a heavy, viscous but fluid, mucilage. It is foreseen that a dry mix, to be diluted with water for use, would generally be easier to handle and store. Preferred components of such a dry mix are as follows:
protein, such as soy isolate protein;
sodium carbonate monohydrate;
a polymeric emulsifier (for example, polyacrylamide or polyvinylpirrolidone); and
potassium sorbate (food grade).

It is noted that some substitutions may be made, for example, sodium propionate might be substituted for potassium sorbate as the preservative.

Preferably, the dry mix is prepared in ouch a manner that when mixed with water, the resulting hay treatment composition will have the following composition of constituents, by weight (the remainder being substantially water):
About 4 to 10% protein, such as soy isolate protein;
About 1 to 3% sodium carbonate monohydrate;
About 0.1 to about .4% potassium sorbate; and
About 0.05 to 0.3% polymeric emulsifier.

A preferred dry mix powder for yielding the above hay treatment includes the following components, by weight:
About 78.74% protein (food grade), such as soy isolate protein;
About 18.2% sodium carbonate monohydrate;
About 2.62% potassium sorbate (food grade); and
About 0.44% polymeric emulsifier or
About 5.0% PVP.

It is noted that anhydrous sodium carbonate could readily be substituted for the monohydrate.

During the mixing with water, the polymeric emulsifier is converted to its sodium salt. The resulting spray is preferably used in quantities of about 1,500 to 3,000 ml of spray per 1,200 to 1,500 pounds of hay, with the amount of spray being varied proportionately with the amount of hay.

A particular problem with developing a dry mix has been that the mix must be such that it can be readily mixed with water, by the farmer and preferably by hand, to form a stable mucilage. It some instances it will be preferred to use hot tap water to lessen the length of time taken for mixing.

### GENERAL OBSERVATIONS WITH RESPECT TO THE DISCLOSED COMPOSITIONS

In general, both formulations provided good coatings for harvested material such as hay. The coated food stock appears to be acceptable to animals, and the preferred coatings can be manufactured from materials readily available. It is noted that, for the most part, the coatings will only be found in the outer 7% to 25% of the hay being treated, so that the amount of composition eaten by any animal would be relatively low.

The coatings are also useful as general binding and water repelling agents suitable, for example, for use on corrugated boxes, pulverulent materials, or other materials, particularly where edible materials may be involved or purchased.

It is to be understood that while certain embodiments of the present invention have been illustrated and described, it is not to be limited to the specific forms described, except as limited by the following claims.

## Claims

1. A composition for spreading over cellulosic animal feed material to generate an edible, moisture resistant adhesive coating binding a mass of said material together and protecting said mass from effects of wind and rain, the composition comprising: (a) a soy isolate edible protein forming an adhesive; (b) an emulsifier forming a film agent; (c) a base; and (d) an antimicrobial-acting preserving agent.

2. The composition set forth in Claim 1 wherein: said emulsifier is a polymer.

3. The composition set forth in claim 1 wherein: (a) said base is anhydrous sodium carbonate; and (b) said preserving agent is potassium sorbate.

4. The composition set forth in Claim 1 wherein said antimicrobial-acting preserving agent is propionic acid.

5. The composition set forth in Claim 1 wherein said composition is a mucilage and includes the following components by weight in an aqueous solution: (a) 6% to 10% soy isolate protein; (b) 0.5% to 1.2% polyvinylpirrolidone; (c) 0.05% to 0.2% polyacrylamide emulsifying agent; (d) 0.2% to 0.4% propionic acid; and (a) the remainder of the composition being water.

6. The composition set forth in Claim 1 wherein said composition is a dry powder composition suitable for mixing with water to form an adhesive mucilage and including the following dry mix components by weight: (a) 70 to 85 parts soy isolate protein; (b) 16 to 20 parts sodium carbonate; (c) 1.5 to 3.5 parts potassium sorbate; and (d) 0.2 to 0.6 parts polymeric emulsifying agent.

7. The composition set forth in Claim 7 wherein said composition is a dry powder composition suitable for mixing with water to form an adhesive mucilage and including the following dry mix components by weight: (a) 79 parts soy isolate protein; (b) 18 parts sodium carbonate; (a) 2.6 parts potassium sorbate; and (d) 0.4 parts of polymeric emulsifying agent.

8. The composition set forth in Claim 1 wherein said composition is a mucilage, has an aqueous base, and includes the following components, in the following ratios by weight: (a) 5 parts to 10 parts soy isolate protein; (b) 0.5 to 1.0 parts polyvinylpirrolidone; (c) 0.25 to 0.5 parts sodium carboxymethylcellulose; (d) 0.25 to 0.5 parts glyceryl triacetate; (e) 0.5 to 1.5 parts polyethylene glycol 400 emulsifier; (f) 0.1 to 0.4 parts propionic acid; and (g) the remainder of the composition being water.

## Patentansprüche

1. Zusammensetzung zum Auftragen auf cellulosehaltiges Tierfuttermaterial zum Erzeugen einer eßbaren feuchtigkeitsbeständigen Klebschicht, die eine Menge des Materials zusammenhält und die Menge vor den Wirkungen von Wind und Regen schützt, wobei die Zusammensetzung umfaßt: (a) ein aus Soja isoliertes eßbares Protein, welches einen Klebstoff bildet; (b) einen Emulgator, der einen Filmbildner bildet; (c) eine Base; und (d) ein antimikrobiell wirkendes Konservierungsmittel.

2. Zusammensetzung nach Anspruch 1, worin der Emulgator ein Polymer ist.

3. Zusammensetzung nach Anspruch 1, worin (a) die Base wasserfreies Natriumcarbonat ist; und (b) das Konservierungsmittel Kaliumsorbat ist.

4. Zusammensetzung nach Anspruch 1, worin das antimikrobiell wirkende Konservierungsmittel Propionsäure ist.

5. Zusammensetzung nach Anspruch 1, worin die Zusammensetzung ein Schleimstoff ist und die folgenden Bestandteile, bezogen auf das Gewicht, in einer wäßrigen Lösung enthält: (a) 6% bis 10% aus Soja isoliertes Protein; (b) 0,5% bis 1,2% Polyvinylpyrrolidon; (c) 0,05% bis 0,2% Polyacrylamid-Emulgiermittel; (d) 0,2% bis 0,4% Propionsäure und wobei (e) der Rest der Zusammensetzung Wasser ist.

6. Zusammensetzung nach Anspruch 1, worin die Zusammensetzung eine Trockenpulverzusammensetzung ist, die sich zum Vermischen mit Wasser unter Bildung eines klebenden Schleimstoffs eignet und die folgenden Trockenmischungsbestandteile, bezogen auf das Gewicht, enthält: (a) 70 bis 85 Teile aus Soja isoliertes Protein; (b) 16 bis 20 Teile Natriumcarbonat; (c) 1,5 bis 3,5 Teile Kaliumsorbat und (d) 0,2 bis 0,6 Teile polymeres Emulgiermittel.

7. Zusammensetzung nach Anspruch 1, worin die Zusammensetzung eine Trockenpulverzusammensetzung ist, die sich zum Vermischen mit Wasser unter Bildung eines klebenden Schleimstoffs eignet und die folgenden Trockenmischungsbestandteile, bezogen auf das Gewicht, enthält: (a) 79 Teile aus Soja isoliertes Protein; (b) 18 Teile Natriumcarbonat; (c) 2,6 Teile Kaliumsorbat und (d) 0,4 Teile polymeres Emulgiermittel.

8. Zusammensetzung nach Anspruch 1, worin die Zusammensetzung ein Schleimstoff ist, eine wäßrige Base aufweist und die folgenden Bestandteile in den folgenden Gewichtsverhältnissen enthält: (a) 5 bis 10 Teile aus Soja isoliertes Protein; (b) 0,5 bis 1,0 Teile Polyvinylpyrrolidon; (c) 0,25 bis 0,5 Teile Natriumcarboxymethylcellulose; (d) 0,25 bis 0,5 Teile Glyceryltriacetat; (e) 0,5 bis 1,5 Teile Polyethylenglycol 400-Emulgator; (f) 0,1 bis 0,4 Teile Propionsäure; und wobei (g) der Rest der Zusammensetzung Wasser ist.

## Revendications

1. Composition à répandre sur une matière alimentaire cellulosique pour animaux, pour produire un revêtement adhésif résistant à l'humidité, comestible, liant ensemble une masse de ladite matière et protégeant ladite masse des effets du vent et de la pluie, la composition comprenant :
(a) une protéine comestible d'isolat de soja, formant un adhésif ;
(b) un émulsifiant formant un agent filmogène ;
(c) une base ; et
(d) un agent conservateur à action antimicrobienne.

2. Composition selon la revendication 1, dans laquelle : ledit émulsifiant est un polymère.

3. Composition selon la revendication 1, dans laquelle :
(a) ladite base est le carbonate de sodium anhydre ; et
(b) ledit agent conservateur est le sorbate de potassium.

4. Composition selon la revendication 1, dans laquelle ledit agent conservateur à action antimicrobienne est l'acide propionique.

5. Composition selon la revendication 1, laquelle est un mucilage et comprend les composants suivants, en poids, dans une solution aqueuse :
(a) 6% à 10% de protéine d'isolat de soja ;
(b) 0,5% à 1,2% de polyvinylpyrrolidone ;
(c) 0,05% à 0,2% d'agent émulsifiant constitué d'un polyacrylamide ;
(d) 0,2% à 0,4% d'acide propionique ; et
(e) le reste de la composition étant de l'eau.

6. Composition selon la revendication 1, laquelle est une composition en poudre sèche, appropriée pour un mélange avec de l'eau afin de former un mucilage adhésif et comprenant les composants de mélange sec suivants, en poids :
(a) 70 à 85 parties de protéine d'isolat de soja ;
(b) 16 à 20 parties de carbonate de sodium ;
(c) 1,5 à 3,5 parties de sorbate de potassium ; et
(d) 0,2 à 0,6 partie d'agent émulsifiant polymère.

7. Composition selon la revendication 7, laquelle est une composition en poudre sèche, appropriée pour un mélange avec de l'eau afin de former un mucilage adhésif et comprenant les composants de mélange sec suivants, en poids :
(a) 79 parties de protéine d'isolat de soja ;
(b) 18 parties de carbonate de sodium ;
(c) 2,6 parties de sorbate de potassium ; et
(d) 0,4 partie d'agent émulsifiant polymère.

8. Composition selon la revendication 1, laquelle est un mucilage, a une base aqueuse, et comprend les composants suivants, dans les quantités en poids suivantes :
(a) 5 parties à 10 parties de protéine d'isolat de soja ;
(b) 0,5 à 1,0 partie de polyvinylpyrrolidone ;
(c) 0,25 à 0,5 partie de carboxyméthylcellulose sodique ;
(d) 0,25 à 0,5 partie de triacétate de glycéryle ;
(e) 0,5 à 1,5 partie d'émulsifiant polyéthylène glycol 400 ;
(f) 0,1 à 0,4 partie d'acide propionique ; et
(g) le reste de la composition étant de l'eau.
